# EUROPÄISCHE PATENTSCHRIFT

(11) **EP 0 610 690 B1**
(45) Veröffentlichungstag und Bekanntmachung des Hinweises auf die Patenterteilung: **20.11.1996**
(21) Anmeldenummer: 94100683.5
(22) Anmeldetag: 19.01.1994
(51) Int. Cl.: B28D 1/04, B23D 45/12

(54) **Verfahren und Vorrichtung zur Herstellung eines Spitzendes an einem Beton- oder Stahlbetonrohr**
Method and apparatus for the manufacture of a spigot end on a concrete or reinforced concrete pipe
Procédé et dispositif pour la fabrication d'un embout pour tube en béton ou béton armé

(30) Priorität: 20.01.1993 DE 4301363
(43) Veröffentlichungstag der Anmeldung: 17.08.1994
(73) Patentinhaber: Brust, Arnold, D-55743 Idar-Oberstein (DE)
(72) Erfinder: Brust, Arnold, D-55743 Idar-Oberstein (DE)
(74) Vertreter: Oppermann, Ewald, Dipl.-Ing.

(56) Entgegenhaltungen:
- EP-A- 0 263 001
- DE-A- 1 477 659
- BETONWERK + FERTIGTEIL-TECHNIK Bd. 1, Nr. 92 , Januar 1992 , WIESBADEN Seiten 115 - 116 'SÄGEN UND FRÄSEN AN BETONROHREN'

## Beschreibung

Die Erfindung bezieht sich auf ein Verfahren zur Herstellung eines Spitzendes an einem Beton- oder Stahlbetonrohr entsprechend dem Oberbegriff der nebengeordneten Patentansprüche 1 und 2 und schließt auch eine Vorrichtung zur Durchführung des Verfahrens ein.

Derartige Beton- oder Stahlbetonrohre werden in Standardlängen hergestellt, so daß je nach Einbausituation die Standardrohre häufig auf unterschiedliche Paßlängen gekürzt werden müssen. Selbstverständlich wird dabei nicht von den verdickten Muffenenden ausgegangen, sondern von den sogenannten Spitzenden, die bei diesem Vorgang zusammen mit der überschüssigen Rohrlänge abgeschnitten werden. An der verbliebenen Rohrlänge muß dann wieder ein Spitzende angeformt werden, was nach dem Stand der Technik weitgehend in aufwendiger Handarbeit erfolgt. Die auf diese Weise hergestellten Spitzenden genügen häufig den gestiegenen Anforderungen an die Maßhaltigkeit nicht. Darüber hinaus können die abgeschnittenen Restrohrstücke in Ermangelung eines wirtschaftlichen Bearbeitungsverfahrens häufig nicht weiter verwendet werden und müssen unter einem Kostenaufwand beseitigt werden, der den Preis der eingesetzten Rohstoffe übersteigen kann.

Die im Prinzip mögliche Anformung von abgestuften Spitzenden durch von der Rohraußenfläche ausgehendes Abfräsen stellt angesichts des dabei abzutragenden Betonvolumens ein sehr unwirtschaftliches Verfahren dar, dessen Anwendung auch an vorhandener Stahlbewehrung scheitern kann, weil die Bewehrungslängsstäbe mit einem Betonfräser nicht abgefräst werden können. Bei einem derartigen bekannten Verfahren (Zeitschrift BETONWERK + FERTIGTEIL-TECHNIK; Heft 1/1992) wird eine u.a. zum Ablängen durch gerade Schnitte und zum Anbringen von Schrägschnitten bestimmte Rohrsäge eingesetzt, die zusätzlich mit Fräswerkzeugen für das Fräsen neuer Spitzenden ausgerüstet ist. Damit können auch bei entsprechender Ausrüstung in einem weniger präzisen Arbeitsgang gleichzeitig zwei neue Spitzenden gefräst und das betreffende Rohr anschließend in zwei Rohre zersägt werden. Für das Fräsen werden die von innen zentriert gehaltenen Rohre langsam gedreht. Für das dem Fräsen der Spitzenden folgende Trennen durch das Sägeblatt ist das jeweilige Rohr wieder auf einen motorisch verfahrbaren Rohrwagen zurückzulegen, um dort durch entsprechende Sägeschnitte in zwei oder mehrere Rohrstücke getrennt zu werden.

Der Erfindung liegt die Aufgabe zugrunde, ein Verfahren der eingangs angegebenen Art und eine zur Verfahrensdurchführung besonders geeignete Vorrichtung bereitzustellen, mit welchem bzw. welcher Spitzenden kostengünstig und maßhaltig an Beton- oder Stahlbetonrohre angeformt werden können.

Diese Aufgabe wird durch die kennzeichnenden Merkmale der Patentansprüche 1 und 2 für die Verfahrensseite und die Merkmale des Patentanspruchs 6 für die Vorrichtungsseite gelöst. Die jeweils zugehörigen Unteransprüche enthalten die nachstehend näher erläuterten vorteilhaften Weiterbildungen der Erfindung.

Nach dem Grundgedanken der Erfindung wird das zur Ausbildung der Spitzendenkontur von dem betreffenden Rohrende abzunehmende Betonvolumen durch Anbringung verhältnismäßig dünner radialer und axialer Schnitte, d.h. durch materialabtragendes Einwirken auf relativ kleine Schnittflächen, entfernt, wobei das zur Spitzendenformung abzutrennende Betonvolumen im wesentlichen als einteiliger Ringkörper anfällt, der als Abfallstück leicht entfernbar ist. Mit dem erfindungsgemäßen Verfahren lassen sich auch an Beton- oder Stahlbetonrohre bereits passender Länge Spitzenden an hohlzylindrische Rohrenden anformen, wie aus dem Nebenanspruch 3 hervorgeht. Im Rahmen der Erfindung können auch die Verfahrensschritte (a) und (b) in ihrer Reihenfolge vertauscht werden, wie in den Anspruch 2 angegeben ist, wenngleich die im Anspruch 1 angegebene Reihenfolge bevorzugt wird. Bei mit inneren und äußeren Bewehrungsstäben armierten Stahlbetonrohren wird die Stufenbohrung vorteilhaft zwischen der inneren und der äußeren Bewehrung vorgetrieben, so daß hierbei das Bohrwerkzeug nicht auf Stahlmaterial trifft. Die Bewehrungsstäbe der äußeren Bewehrung werden bei dem radialen Sägeschnitt entsprechend dem Verfahrensmerkmal (b) durchtrennt.

Die entsprechend dem Verfahrensschritt (a) anzubringende Stufenbohrung kann in zwei Arbeitsgängen vorgetrieben werden, wobei zweckmäßig zunächst die größere Durchmesserstufe des Spitzendes erzeugt und anschließend die kleinere Durchmesserstufe zusammen mit der mittleren Stirnfläche des Spitzendes angebracht wird. Vorzugsweise wird die Stufenbohrung jedoch entsprechend Anspruch 1 in einem Arbeitsgang unter Ausbildung sowohl beider Durchmesserstufen als auch der mittleren Stirnfläche erzeugt.

Zweckmäßig werden radiale Sägeschnitte am sich drehenden Beton- oder Stahlbetonrohr vorgenommen, während die Stufenbohrung in das stationär gehaltene Rohr eingebracht wird.

Mit dem erfindungsgemäßen Verfahren lassen sich Beton- oder Stahlbetonrohre eines Nennweitenbereichs von etwa 300 bis 2000 mm bearbeiten. Die Länge der auf Paßmaß zu kürzenden Rohre ist für das erfindungsgemäße Verfahren nicht kritisch. Rohre eines Baulängenbereichs zwischen etwa 500 bis 3500 mm lassen sich ohne weiteres erfindungsgemäß bearbeiten.

Wie aus Anspruch 6 hervorgeht, setzt sich die erfindungsgemäße Vorrichtung im wesentlichen aus (A) einem Rohraufnahmebett zur Lagerung und den Drehantrieb des zu bearbeitenden Rohres, (B) einer daran angebrachten verstellbaren Rohrsäge für die radialen Sägeschnitte und (C) einer Werkzeugträgereinheit für die genaue Positionierung, den Drehantrieb und den Vorschub einer die axiale Stufenbohrung erzeugenden Bohrkrone zusammen. Rohraufnahmebett und Werkzeugträgereinheit können dabei auf einem gemeinsamen Maschinengrundrahmen angebracht sein.

Eine vorteilhafte Ausführungsform des Rohraufnahmebettes geht aus Anspruch 7 hervor, während Anspruch 8 eine zweckmäßige Ausgestaltung desselben für die Anpassung an unterschiedliche Rohrdurchmesser angibt.

Die Ausbildung und Anbringung der Rohrsäge erfolgt mit Vorteil so wie im Anspruch 9 angegeben ist. Die dabei vorgesehenen Führungsmittel für die Einstellung der Rohrsäge auf unterschiedliche Rohrdurchmesser lassen sich zweckmäßig auch für die Vorschubführung der Rohrsäge verwenden.

Anspruch 10 enthält eine bevorzugte Ausführungsform der Werkzeugträgereinheit mit einem in den drei Koordinatenachsen verstell- und verschiebbar gelagerten Antriebsmotorblock für die auswechselbare Bohrkrone, die entsprechend Anspruch 11 für einen einmaligen Werkzeugdurchgang bei Anbringung der Axialbohrung in bestimmter Weise zweistufig ausgebildet ist.

Weitere Einzelheiten der Erfindung werden nachfolgend anhand der schematisierten Zeichnungen näher erläutert. Darin zeigt:
- Fig. 1: die Seitenansicht eines Stahlbetonrohres nach dem auf Paßlänge verkürzenden radialen Sägeschnitt,
- Fig. 2: die teilweise aufgebrochene Seitenansicht des in Fig. 1 dargestellten Stahlbetonrohres nach Herstellung des Spitzendes,
- Fig. 3: einen Längsschnitt durch eine Bohrkrone und das Spitzende eines Stahlbetonrohres, wobei letzteres unterhalb seiner Mittellinie mit fertiggestelltem Spitzende und oberhalb der Mittellinie unmittelbar nach Anbringung der axialen Stufenbohrung, aber vor Anbringung des das Spitzende fertigstellenden radialen Sägeschnitts dargestellt ist,
- Fig. 4: eine Seitenansicht der Vorrichtung mit Rohraufnahmebett, Rohrsäge und Werkzeugträgereinheit,
- Fig. 5: eine Stirnansicht des Rohraufnahmebettes und der Rohrsäge mit aufgelagertem Rohr, mit Stirnansicht der Rohrringfläche, in welche die radiale Stufenbohrung vorzutreiben ist, und
- Fig. 6: die teilweise geschnittene Draufsicht auf die Werkzeugträgereinheit mit angebrachter Bohrkrone.

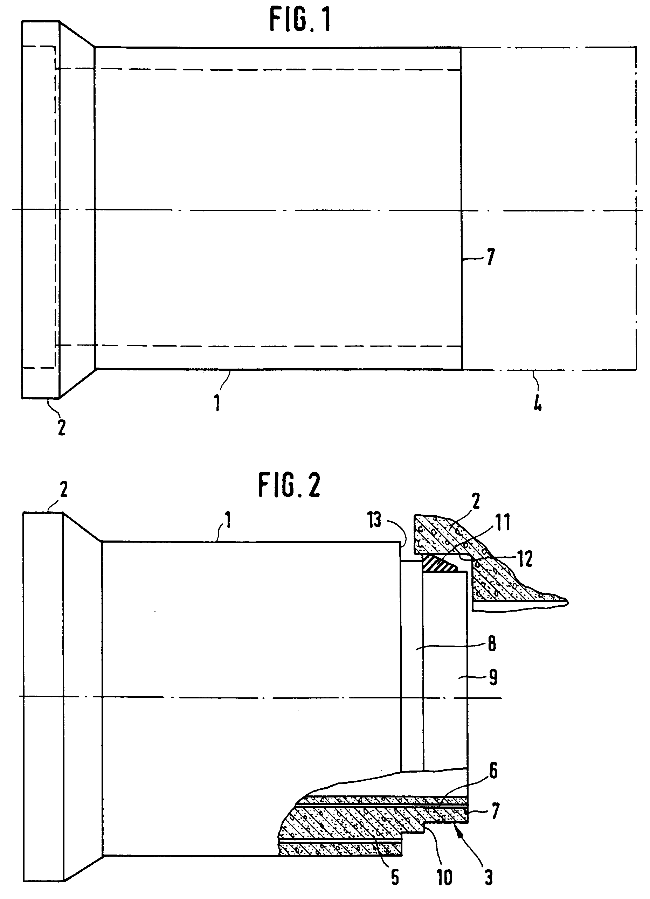

Das in den Figuren 1 und 2 dargestellte Stahlbetonrohr 1 ist an einem Ende mit einer Muffe 2 versehen, die zur Aufnahme des Spitzendes eines Anschlußrohres ausgebildet ist. Diese Situation ist in Fig. 2 oberhalb der Mittellinie für das an das Stahlbetonrohr anzubringende Spitzende 3 mit abgebrochen angedeuteter Muffe 3 des Anschlußrohres dargestellt. In Fig. 1 ist das bei Verkürzung der Rohrlänge des Rohres 1 angefallene Rohrabfallstück 4 in strichpunktierten Linien angedeutet. Am äußeren Ende des Abfallstückes kann ein Spitzende vorhanden sein, das bei Herstellung des Rohres angeformt wurde (nicht dargestellt). Bei der Herstellung der Paßlänge durch einen radialen Sägeschnitt wurde unter Durchtrennung von in Fig. 2 dargestellten äußeren Bewehrungsstäben 5 und inneren Bewehrungsstäben 6 eine neue Stirnfläche 7 des Rohres 1 gebildet, von welcher bei Erzeugung des in Fig. 2 dargestellten Spitzendes 3 ausgegangen wurde.

Das Spitzende 3 weist eine innere Durchmesserstufe 8 größeren Durchmessers und eine daran anschließende äußere Durchmesserstufe 9 kleineren Durchmessers auf. Zwischen den beiden Durchmesserstufen 8 und 9 befindet sich eine mittlere ringförmige Stirnfläche 10, welche bei Verlegung der Betonrohrleitung als Anlagefläche für einen Dichtring 11 dient, der die Abdichtung gegenüber einer zylindrischen Innenfläche 12 der Muffe 2 des Anschlußrohres übernimmt, wie in Fig. 2 angedeutet ist. Die innere Durchmesserstufe 8 endet an einer durch einen weiteren radialen Sägeschnitt erzeugten und bis zum Rohraußendurchmesser reichenden Stirnfläche 13.

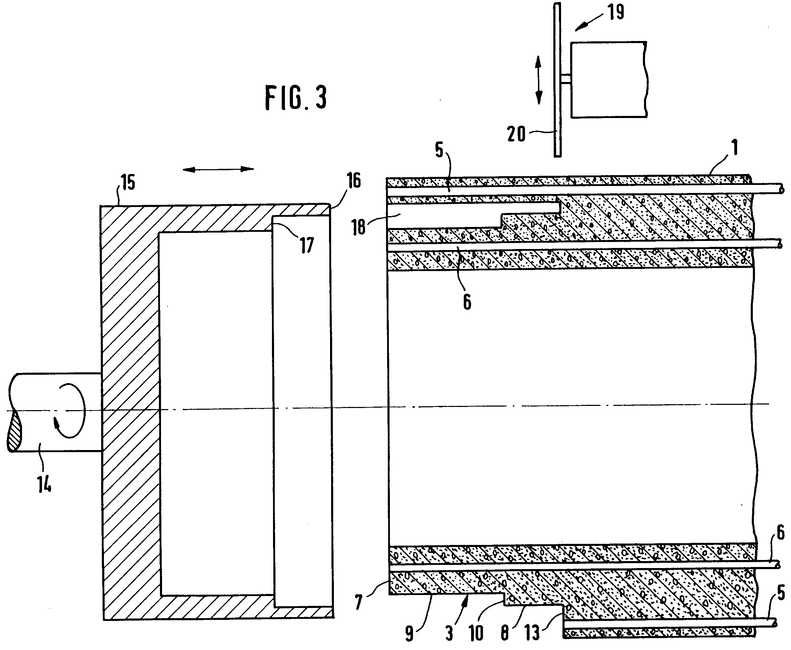

Aus Fig. 3 ist die Anbringung des Spitzendes 3 näher ersichtlich. Die hierfür verwendete auswechselbar an einer Antriebswelle 14 befestigte Bohrkrone 15 besitzt zwei in axialer Richtung beabstandete ringförmige Schneidflächen bzw. Bohrkronenringe 16 und 17, deren axialer Abstand etwa der axialen Länge der inneren Durchmesserstufe 8 des Spitzendes 3 entspricht. Die äußere Schneidfläche 16 besitzt größere Durchmesser und erzeugt die innere Durchmesserstufe, während die innere Schneidfläche 17 kleinere Durchmesser aufweist und sowohl die äußere Durchmesserstufe 9 als auch die mittlere ringförmige Stirnfläche 10 erzeugt. Im gezeigten Beispiel ist die glockenförmig ausgebildete Bohrkrone 15 daher zur Erzeugung einer axialen Stufenbohrung 18 in einem Arbeitsgang ausgebildet. Wie Fig. 3 weiterhin verdeutlicht, fluchten die Mittelachsen der Bohrkrone 15 und des Stahlbetonrohres 1, so daß die Stufenbohrung 18 exakt konzentrisch zur Rohrmitte angebracht wird. Beim Vortreiben der Bohrkrone 15 werden die äußeren und inneren Bewehrungsstäbe 5, 6 nicht berührt. Nach Fertigstellung der von der Stirnfläche 7 ausgehenden Stufenbohrung 18 wird die Bohrkrone aus der Stufenbohrung 18 herausgezogen und ihr Dreh- und Schiebeantrieb abgeschaltet. Daraufhin wird das bei Anbringung der Stufenbohrung 18 fest positionierte Rohr 1 um seine Mittelachse drehend angetrieben und die in Fig. 3 angedeutete entsprechend positionierte Rohrsäge 19 in Betrieb gesetzt, wobei ihr kreisscheibenförmiges Sägeblatt 20 rotierend angetrieben und in Richtung auf die Außenumfangsfläche des Rohres 1 vorgeschoben wird. Der Vorschubantrieb und der Drehantrieb werden fortgesetzt, bis der radiale Sägeschnitt das innere Ende der Stufenbohrung 18 erreicht, womit die Stirnfläche 13 fertiggestellt ist. Bei diesem Sägeschnitt werden die äußeren Bewehrungsstäbe 5 durchtrennt. Das ringförmige Abfallstück wird sodann vom fertigen Spitzende 3 entfernt.

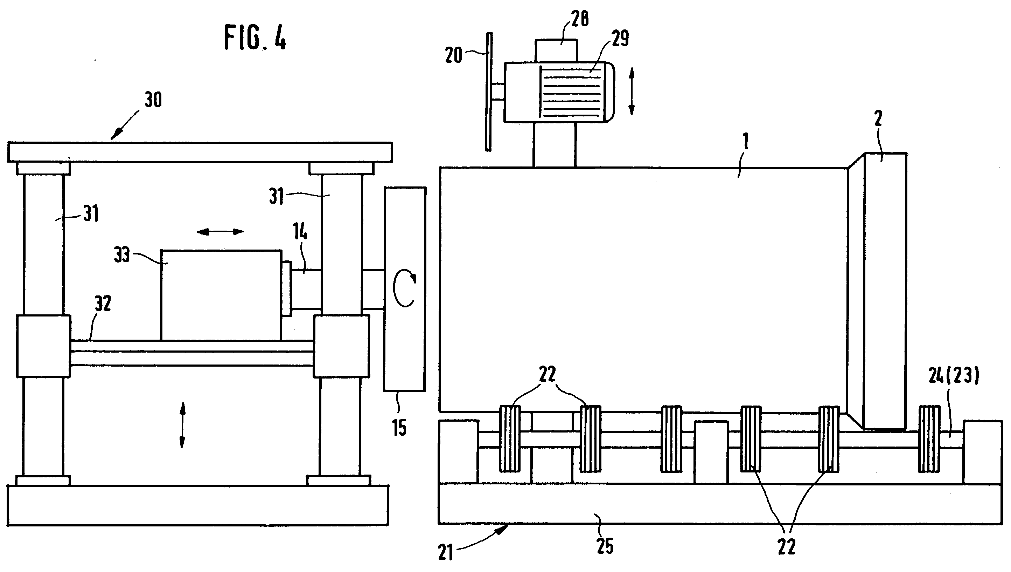

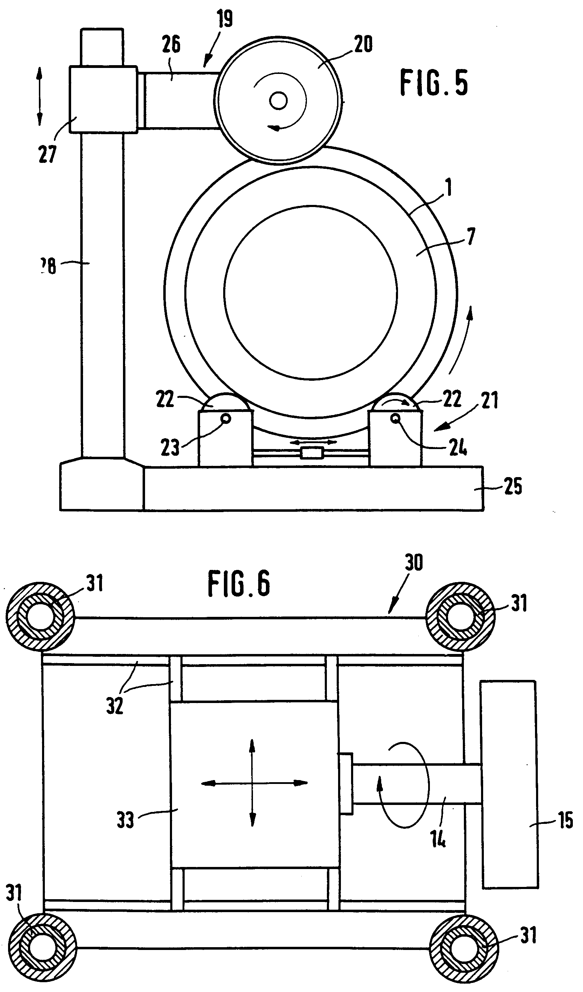

Zur näheren Erläuterung der das Spitzende 3 herstellenden Vorrichtung wird nunmehr auf die Figuren 4 bis 6 Bezug genommen. Das zur Lagerung und den Drehantrieb vorgesehene Rohraufnahmebett 21 besitzt eine Mehrzahl von mindestens teilweise angetriebenen Rollen 22, die an zwei parallelen, beabstandeten horizontal angeordneten Wellen 23 und 24 mit Abstand zueinander befestigt sind. Eine der beiden Wellen, im gezeichneten Beispiel gemäß Fig. 5 die Welle 24, ist mit den daran angebrachten Rollen drehend antreibbar, so daß das auf die Rollen 22 aufgelagerte Rohr 1 nach Art eines Umfangsreibantriebs um seine Mittelachse in Drehung versetzt werden kann. Die Rollen 22 und Wellen 23 und 24 sind so am Grundrahmen 25 des Rohraufnahmebettes 21 angebracht, daß der Abstand zwischen den Wellen 23 und 24 zur Anpassung an unterschiedliche Rohrdurchmesser einstellbar ist, indem beide Wellen um jeweils gleiche Wegstrecken, aber in entgegengesetzten Richtungen verstellbar sind.

Oberhalb der Rollen 22 ist an dem Rohraufnahmebett 21 die Rohrsäge 19 angebracht, die mit ihrem Sägeblatt 20 senkrecht zur Rohrachse ausgerichtet und an einem Auslegerarm 26 befestigt ist. Der Auslegerarm 26 ist über einen Stellschlitten 27 an einer senkrechten, seitlich am Grundrahmen 25 des Rohraufnahmebettes 21 befestigten Säule 28 verschiebbar geführt. Für den rotierenden Antrieb des Sägeblattes 20 ist ein Elektromotor 29 vorgesehen, der mit dem Auslegerarm 26 starr verbunden ist. Die Höheneinstellung der Rohrsäge 19 auf den jeweiligen Rohrdurchmesser erfolgt durch eine hydraulische Stellvorrichtung (nicht dargestellt), die auch den Vorschub bei Vornahme der radialen Sägeschnitte besorgt.

Die Werkzeugträgereinheit 30 für den Drehantrieb, die Positionierung und den Vorschub der Bohrkrone 15 geht aus den Figuren 4 und 6 hervor. Sie umfaßt vier senkrechte Führungssäulen 31, an welcher eine Tragplattform 32 hubverstellbar geführt ist. Auf der Tragplattform 32 befindet sich ein Antriebsmotorblock 33, der in zwei Koordinatenrichtungen an der Tragplattform 32 verschieb- und verstellbar geführt ist. Unter Berücksichtigung der Hubverstellbarkeit der Tragplattform ergeben sich für den Antriebsmotorblock 33 drei Koordinatenrichtungen, in welchen er verstell- und verschiebbar geführt ist. Auf diese Weise kann die im Antriebsmotorblock 33 drehbar gelagerte und rotierend antreibbare Antriebswelle 14 genau fluchtend auf die Mitte des Rohres 1 eingestellt werden. Am äußeren Ende der Antriebswelle 14 befindet sich die in fliegender Anordnung auswechselbar befestigte Bohrkrone 15. Für jede Rohrnennweite ist eine entsprechend ausgebildete Bohrkrone erforderlich. Alle Stell- und Vorschubbewegungen an der Werkzeugträgereinheit 30 erfolgen durch hydraulische Einrichtungen (nicht dargestellt). Die zentrale Ausfluchtung der Bohrkrone 15 zum zu bearbeitenden Rohr 1 erfolgt durch eine optische Steuerungsvorrichtung oder einen Näherungsschalter (nicht dargestellt).

Bei der Einrichtung der beschriebenen Vorrichtung zur Herstellung eines Spitzendes 3 an einem Beton- oder Stahlbetonrohr 1 wird die entsprechende Bohrkrone montiert, und die Wellen 23 und 24 werden auf einen dem Rohraußendurchmesser entsprechenden Abstand eingestellt. Das Betonrohr 1 wird durch Gabelstapler oder mit Kranhilfe in axialer Richtung positioniert auf das Rohraufnahmebett 21 aufgelegt. Wie beschrieben erfolgt dann zunächst und erforderlichenfalls die Herstellung der Paßlänge durch einen ersten radialen Sägeschnitt. Sodann wird die Stufenbohrung 18 vorgetrieben, worauf schließlich der zweite und abschließende radiale Sägeschnitt zur Abtrennung des ringförmigen Abfallstücks vorgenommen wird. Das fertige Paßrohr wird sodann wiederum durch Gabelstapler oder Kran von dem Rohraufnahmebett 21 entfernt.

## Patentansprüche

1. Verfahren zur Herstellung eines im Durchmesser zweifach abgestuften Spitzendes an einem Beton- oder Stahlbetonrohr, bei welchem in zur Rohrachse senkrechten Ebenen befindliche Stirnflächen durch radial geführte Sägeschnitte, ggf. unter Durchtrennung der Stahlbewehrung, erzeugt werden, dadurch gekennzeichnet, daß
a) zunächst ausgehend von der axial äußeren bis zum Rohrinnendurchmesser reichenden Stirnfläche eine mit der Rohrachse konzentrische ringförmige Stufenbohrung in axialer Richtung über die Länge des Spitzendes unter Erzeugung beider Durchmesserstufen und der dazwischen befindlichen axial mittleren Stirnfläche in dem Beton- oder Stahlbetonrohr vorgetrieben wird, wonach
b) ein die axial innere bis zum Rohraußendurchmesser reichende Stirnfläche bildender radialer Sägeschnitt bis zum inneren Ende der Stufenbohrung geführt und schließlich
c) das durch die Stufenbohrung und den radialen Sägeschnitt erzeugte ringförmige Abfallstück von dem Spitzende entfernt wird.

2. Verfahren zur Herstellung eines im Durchmesser zweifach abgestuften Spitzendes an einem Beton- oder Stahlbetonrohr, bei welchem in zur Rohrachse senkrechten Ebenen befindliche Stirnflächen durch radial geführte Sägeschnitte, ggf. unter Durchtrennung der Stahlbewehrung, erzeugt werden, dadurch gekennzeichnet, daß
a) ausgehend von der axial äußeren bis zum Rohrinnendurchmesser reichenden Stirnfläche die mit der Rohrachse konzentrische ringförmige Stufenbohrung in axialer Richtung über die Länge des Spitzendes unter Erzeugung beider Durchmesserstufen und der dazwischen befindlichen axial mittleren Stirnfläche in dem Beton- oder Stahlbetonrohr vorgetrieben wird und schließlich
b) zunächst ein die axial innere bis zum Rohraußendurchmesser reichende Stirnfläche bildender radialer Sägeschnitt bis zum inneren Ende einer noch anzubringenden Stufenbohrung geführt wird, worauf
c) das durch die Stufenbohrung und den radialen Sägeschnitt erzeugte ringförmige Abfallstück von dem Spitzende entfernt wird.

3. Verfahren nach Anspruch 1 oder 2, dadurch gekennzeichnet, daß - als erster Verfahrensschrittzunächst ein die exakte Rohrlänge herstellender und dabei die axial äußere bis zum Rohrinnendurchmesser reichende Stirnfläche bildender radialer Sägeschnitt vorgenommen wird.

4. Verfahren nach einem der Ansprüche 1 bis 3, dadurch gekennzeichnet, daß die Stufenbohrung in einem Arbeitsgang erzeugt wird.

5. Verfahren nach einem der Ansprüche 1 bis 4, dadurch gekennzeichnet, daß das Beton- oder Stahlbetonrohr bei Vornahme der radialen Sägeschnitte um seine Achse gedreht, bei Vortrieb der Stufenbohrung jedoch stationär gehalten wird.

6. Vorrichtung zur Durchführung des Verfahrens nach mindestens einem der Ansprüche 1 bis 5, gekennzeichnet durch
a) ein Rohraufnahmebett (21) mit einer Mehrzahl von mindestens teilweise angetriebenen Rollen (22) zur zentrischen Abstützung, Drehlagerung und zum Umfangsreibantrieb eines Beton- oder Stahlbetonrohrs (1),
b) eine an dem Rohraufnahmebett (21) oberhalb der Rollen (22) angebrachte, senkrecht zur Rohrachse für die Höhenverstellung bewegbar geführte und für den Vorschub antreibbare Rohrsäge (19) und
c) eine Werkzeugträgereinheit (30) mit einer um eine Antriebsachse drehend antreibbaren, in Achsrichtung bewegbar geführten und für den Vorschub antreibbaren Bohrkrone (15), deren Antriebsachse auf die Rohrachse fluchtend einstellbar ist.

7. Vorrichtung nach Anspruch 6, dadurch gekennzeichnet, daß am Rohraufnahmebett (21) an zwei parallelen, beabstandeten Wellen (23, 24) jeweils mehrere Rollen (22) mit Abstand zueinander angebracht sind, daß eine der Wellen (24) mit den daran angebrachten Rollen (22) drehend antreibbar ist, und daß der Abstand zwischen den beiden Wellen (23, 24) zur Anpassung an den Rohraußendurchmesser einstellbar ist.

8. Vorrichtung nach Anspruch 7, dadurch gekennzeichnet, daß zur Einstellung des Abstandes zwischen den beiden Wellen (23, 24) die beiden Wellen jeweils um gleiche Wegstrecken, aber in entgegengesetzten Richtungen verstellbar sind.

9. Vorrichtung nach mindestens einem der Ansprüche 6 bis 8, dadurch gekennzeichnet, daß die Rohrsäge (19) mit ihrem kreisscheibenförmigen Sägeblatt (20) senkrecht zur Rohrachse ausgerichtet und an einem Auslegerarm (26) befestigt ist, der über einen Stellschlitten (27) an einer senkrechten, seitlich am Rohraufnahmebett (21) befestigten Säule (28) geführt ist.

10. Vorrichtung nach mindestens einem der Ansprüche 6 bis 9, dadurch gekennzeichnet, daß an der Werkzeugträgereinheit (30) ein Antriebsmotorblock (33) in den drei Koordinatenrichtungen verstell- und verschiebbar geführt ist, und daß eine Antriebswelle (14) im Antriebsmotorblock (33) drehbar und antreibbar gelagert ist, an deren äußerem Ende in fliegender Anordnung die Bohrkrone (15) auswechselbar befestigt ist.

11. Vorrichtung nach mindestens einem der Ansprüche 6 bis 10, dadurch gekennzeichnet, daß die Bohrkrone (15) zweistufig ausgebildet ist, mit einem äußeren, die größere Durchmesserstufe (8) des Spitzendes (3) erzeugenden Bohrkronenring (16) und einem inneren, die kleinere Durchmesserstufe (9) sowie die axial mittlere Stirnfläche (10) des Spitzendes (3) erzeugenden Bohrkronenring (17).

## Claims

1. Method of making a spigot end with two steps in diameter on a concrete or reinforced concrete pipe, in which transverse faces lying in planes perpendicular to the pipe axis are created by radially guided saw cuts, if required with cutting through of the steel reinforcement, characterized in that:
a) starting first from the axially outer transverse face, extending as far as the pipe internal diameter, an annular stepped bore concentric to the pipe axis is driven in the axial direction into the concrete or reinforced concrete pipe over the length of the spigot end with the creation of both diameter steps and of the middle transverse face situated axially between them, after which
b) a radial saw cut forming the axially inner transverse face extending to the pipe external diameter is made right up to the inner end of the stepped bore, and finally
c) the annular waste piece created by the stepped bore and the radial saw cut is removed from the spigot end.

2. Method of making a spigot end with two steps in diameter on a concrete or reinforced concrete pipe, in which transverse faces lying in planes perpendicular to the pipe axis are created by radially guided saw cuts, if necessary with cutting through of the steel reinforcement, characterized in that,
a) starting from the axially outer transverse face extending as far as the pipe internal diameter, the annular stepped bore concentric to the pipe axis is driven in the axial direction in the concrete or reinforced concrete pipe over the length of the spigot end with creation of both the diameter steps and of the middle transverse face situated axially between them, and finally
b) first, a radial saw cut forming the axially inner transverse face extending as far as the pipe external diameter is made as far as the inner end of a stepped bore yet to be formed, whereupon
c) the annular waste piece created by the stepped bore and the radial saw cut is removed from the end of the spigot.

3. Method according to claim 1 or 2, characterized in that, as first process step,
a radial saw cut producing the exact pipe length and thus forming the axially outer transverse face, extending to the pipe internal diameter, is first made.

4. Method according to one of claims 1 to 3, characterized in that the stepped bore is produced in one operation.

5. Method according to one of claims 1 to 4, characterized in that the concrete or reinforced concrete pipe is rotated about its axis while the radial saw cuts are made, but is held stationary while the stepped bore is driven.

6. Apparatus for performing the method according to at least one of claims 1 to 5, characterized by
a) a pipe holding bed (21) comprising a plurality of at least partly driven rollers (22), for the centring support of, rotational journalling of and peripheral friction drive of a concrete or reinforced concrete pipe (1),
b) a pipe saw (19), mounted on the pipe holding bed (21) above the rollers (22) and movably guided perpendicularly to the pipe axis for adjustment in height and drivable for the feed, and
c) a tool carrier unit (30) comprising a core drill (15), rotatably drivable about a drive axis, movably guided in the axial direction and drivable for the feed, the drive axis of which is adjustable to align with the pipe axis.

7. Apparatus according to claim 6, characterized in that, on the pipe holding bed (21), several spaced apart rollers (22) are mounted on each of two parallel, spaced apart shafts (23, 24), that one of the shafts (24) is rotatably drivable with the rollers (22) mounted thereon, and that the distance between the two shafts (23, 24) can be adjusted to suit the pipe external diameter.

8. Apparatus according to claim 7, characterized in that, for adjusting the distance between the two shafts (23, 24), the two shafts are each adjustable by equal distances but in opposite directions.

9. Apparatus according to at least one of claims 6 to 8, characterized in that the pipe saw (19) is aligned with its circular saw blade (20) perpendicularly to the pipe axis and is fixed to a cantilever arm (26), which is guided by an adjusting slide block (27) on a vertical column (28) fixed laterally to the pipe holding bed (21).

10. Apparatus according to at least one of claims 6 to 9, characterized in that, on the tool carrier unit (30), a drive motor block (33) is guided adjustably and displaceably in the three coordinate directions, and that a drive shaft (14) is journalled rotatably and drivably in the drive motor block (33), to the outer end of which shaft the core drill (15) is replaceably fixed in overhung manner.

11. Apparatus according to at least one of claims 6 to 10, characterized in that the core drill (15) is of two-step construction, comprising an outer core drill ring (16) creating the larger diameter step (8) of the spigot end (3) and an inner core drill ring (17), creating the smaller diameter step (9) and also the axially middle transverse face (10) of the spigot end (3).

## Revendications

1. Procédé pour fabriquer un embout effilé en gradins à deux diamètres sur un tube en béton ou en béton armé, dans lequel on réalise par des découpes à la scie pratiquées radialement, éventuellement en coupant l'armature d'acier, des surfaces frontales situées dans des plans perpendiculaires à l'axe du tube, caractérisé en ce que :
a) en partant de la surface frontale axialement extérieure qui s'étend jusqu'au diamètre intérieur du tube, on ménage tout d'abord dans le tube en béton ou en béton armé un perçage annulaire en gradins concentrique à l'axe de tube, en direction axiale sur la longueur de l'embout effilé, en produisant les deux gradins en diamètre et la surface frontale axiale médiane entre ceux-ci, suite à quoi
b) on pratique jusqu'à l'extrémité intérieure du perçage en gradin une découpe de scie radiale qui forme la surface frontale axialement intérieure s'étendant jusqu'au diamètre extérieur du tube, et finalement
c) le rebut annulaire produit par le perçage en gradin et par la découpe de scie radiale est enlevé de l'embout effilé.

2. Procédé pour fabriquer un embout effilé en gradins à deux diamètres sur un tube en béton ou en béton armé, dans lequel on réalise par des découpes à la scie pratiquées radialement, éventuellement en coupant l'armature d'acier, des surfaces frontales situées dans des plans perpendiculaires à l'axe du tube, caractérisé en ce que :
a) en partant de la surface frontale axialement extérieure qui s'étend jusqu'au diamètre intérieur du tube, on ménage dans le tube en béton ou en béton armé le perçage annulaire en gradins concentrique à l'axe de tube, en direction axiale sur la longueur de l'embout effilé, en produisant les deux gradins en diamètre et la surface frontale axiale médiane entre ceux-ci, suite à quoi
b) on pratique en premier une coupe de scie radiale qui forme la surface frontale axialement intérieure s'étendant jusqu'au diamètre extérieur du tube jusqu'à l'extrémité intérieure d'un perçage en gradin encore a ménager, et finalement
c) le rebut annulaire produit par le perçage en gradin et par la coupe de scie radiale est enlevé de l'embout effilé.

3. Procédé selon l'une ou l'autre des revendications 1 et 2, caractérisé en ce que l'on effectue, comme première opération du procédé, tout d'abord une découpe de scie radiale qui établit la longueur exacte du tube et qui forme ce faisant la surface frontale axialement extérieure s'étendant jusqu'au diamètre intérieur du tube.

4. Procédé selon l'une quelconque des revendications 1 à 3, caractérisé en ce que le perçage en gradin est produit en une seule opération de travail.

5. Procédé selon l'une quelconque des revendications 1 à 4, caractérisé en ce que le tube en béton ou en béton armé est tourné autour de son axe lorsque l'on effectue les découpes de scie radiales, mais en ce qu'il est maintenu de façon stationnaire lorsque l'on ménage le perçage en gradin.

6. Dispositif pour la mise en oeuvre du procédé selon l'une au moins des revendications 1 à 5, caractérisé par :
a) un sommier de réception de tube (21) comportant une pluralité de galets (22) entraînés au moins partiellement pour le support central, pour le montage en rotation et pour la commande à friction périphérique d'un tube en béton ou en béton armé (1),
b) une scie pour tubes (19) agencée sur le lit de réception de tube (21) au-dessus des galets (22), qui peut être guidée en déplacement perpendiculairement à l'axe de tube pour le réglage en hauteur, et qui peut être entraînée pour l'avance, et
c) une unité porte-outil (30) qui présente une couronne de perçage (15) qui peut être entramée en rotation autour d'un axe d'entraînement, qui est menée en déplacement en direction axiale, qui peut être entraînée pour l'avance et dont l'axe d'entraînement est réglable en alignement avec l'axe du tube.

7. Dispositif selon la revendication 6, caractérisé en ce que plusieurs galets respectifs (22) sont agencés à distance les uns des autres sur le sommier de réception de tube (21) sur deux arbres parallèles (23, 24) écartés l'un de l'autre, en ce que l'un des arbres (24) présentant les galets (22) agencés sur celui-ci peut être entraîné en rotation, et en ce que la distance entre les deux arbres (23, 24) est réglable pour l'ajustement au diamètre extérieur du tube.

8. Dispositif selon la revendication 7, caractérisé en ce que pour régler la distance entre les deux arbres (23, 24), les deux arbres sont réglables respectivement sur les mêmes courses, mais dans des directions opposées.

9. Dispositif selon l'une quelconque au moins des revendications 6 à 8, caractérisé en ce que la scie pour tubes (19) est dirigée par sa lame (20) en forme de disque perpendiculairement à l'axe de tube, et est fixée sur un bras porteur (26) qui est guidé via un chariot de réglage (27) sur une colonne (28) verticale fixée latéralement sur le sommier de réception de tube (21).

10. Dispositif selon l'une quelconque au moins des revendications 6 à 9, caractérisé en ce qu'un bloc moteur d'entraînement (33) est guidé sur l'unité porte-outil (30) de façon réglable et mobile suivant les trois directions de coordonnées, et en ce qu'un arbre d'entraînement (14) est monté en rotation et en entraînement dans le bloc moteur d'entraînement (33), à l'extrémité extérieure duquel est fixée la couronne de perçage (15) de façon interchangeable et suivant un agencement volant.

11. Dispositif selon l'une quelconque au moins des revendications 6 à 10, caractérisé en ce que la couronne de perçage (15) est réalisée avec deux gradins, comportant un anneau extérieur de couronne de perçage (16) qui produit le gradin de diamètre plus important (8) de l'embout effilé (3), et comportant un anneau intérieur de couronne de perçage (17) qui produit le gradin de diamètre plus faible (9) ainsi que la surface frontale axialement médiane (10) de l'embout effilé (3).
